# EUROPEAN PATENT SPECIFICATION

(11) **EP 2 605 990 B1**
(45) Date of publication and mention of the grant of the patent: **04.08.2021**
(21) Application number: 10856110.1
(22) Date of filing: 19.08.2010
(51) Int. Cl.: B66B 1/20, B66B 1/46, G01S 13/82

(54) **PASSENGER FLOW MANAGEMENT SYSTEM**
SYSTEM ZUR PASSAGIERFLUSSVERWALTUNG
SYSTÈME DE GESTION DE CIRCULATION DES PASSAGERS

(43) Date of publication of application: 26.06.2013
(73) Proprietor: Kone Corporation, 00330 Helsinki (FI)
(72) Inventor: DE VINCENTIS, Vittorio, EE-76901 Tabasalu (EE)
(74) Representative: K & H Bonapat Patentanwälte Koch · von Behren & Partner mbB
(86) International application number: PCT/FI2010/050659
(87) International publication number: WO 2012/022827

(56) References cited:
- EP-A1- 1 308 409
- EP-A1- 1 764 334
- EP-A1- 1 764 334
- WO-A1-2008/116963
- WO-A2-2007/026042
- WO-A2-2007/026042
- WO-A2-2009/132470
- US-A1- 2005 138 385
- US-A1- 2006 065 490
- US-A1- 2009 014 254
- US-A1- 2009 014 254

## Description

### Field of invention

This invention relates to systems for managing elevator passenger flow.

### Background of invention

In present elevator systems, the elevator passenger may use portable communication / identification devices such as rfid tags or mobile radio systems for sending control messages to elevator control system. For example, in some elevator systems it is possible to use mobile phone or smart card to give a destination call to elevator.

However, in urban environments there is a need for even more sophisticated solutions. For example, it is not always possible to increase elevator capacity whilst number of people using elevator is growing. This may have the effect that elevator waiting times become too long.

The method of operating an elevator installation disclosed in US 2009/0014254 A1 comprises the steps: detecting the position of elevator users in the building area, granting of an access authorization of the elevator users to building regions, and boarding of an elevator car by at least one detected elevator user, if an elevator call was triggered triggering a car call by a detected elevator user. In the elevator call registration system described in EP 1 764 334 A1, elevator-related information is constantly transmitted from an elevator call registration server, and a call registration reservation for a desired elevator can be made by selecting contents from the information. In EP 1 308 409 A1, a system has a floor terminal for recognizing an identification code of person or an item. A bus module with a data memory for storing a user profile of the person or item communicates with the floor terminal through a signal bus. A processor associates the recognized identification code with the user profile. In US 2005/0138385 A1, a method of operating a system is described, wherein a person is authenticated by at least one authentication signal. In the case of correspondence of the authentication signal and a person reference, at least one identification code is detected by a stationary recognition device and assigned to a predefined travel destination or to an input travel destination input at the recognition device by the person. In US 2006/0065490 A1, an elevator system utilizes destination entry dispatching techniques. An elevator controller allows for override or secondary destination requests to be made at various intervals between receipt of the initial request and arrival of an initially assigned car at an appropriate level to let the passenger board the elevator car. In WO2007/026042 A2, a passenger's arrival is detected by means of a first remote sensing device is placed at a first distance from the elevator. An elevator call generated by the first remote sensing device is confirmed on the basis of a detection made by a second remote sensing device, which is located at a second distance from the elevator being shorter than the first distance.

### Summary

Therefore it is object of the present invention to introduce an improved system for managing passenger flow inside and outside of a building such that waiting times of elevator located inside the building may be optimized, preferably reduced. This object is solved with the passenger flow management system according to independent claim 1. Preferred embodiments of the invention are disclosed in the dependent claims.

According to the invention, it possible that the elevator of for example residence building or work place is always there waiting for the passenger and ready to transport to his floor without him doing anything, without even pressing a call button.

### Brief description of the drawings

The invention is hereinafter described by the aid of the drawings. In these show
- Figure 1: area within which the elevator is capable of detecting people's presence
- Figure 2: passenger detecting solution implementing rfid readers
- Figure 3: passenger detecting solution implementing GPS - GSM technology

### Description of the embodiments

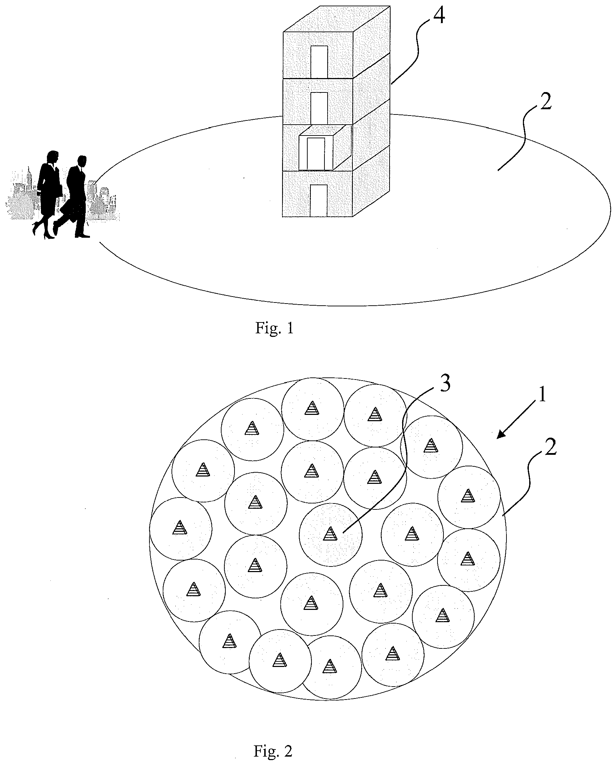

Figure 1 shows people going towards an elevator inside a building (not shown), and assuming also they want to go always or usually to the same floor.

The circular area 2 around the elevator represents an area within which the elevator is capable of detecting people's presence. The idea is that users of an elevator are registered with it and given some smart card or device which contains their data and destination floor. When a registered user carrying such card enters the detecting area 2 the elevator will read the card info and go to the first floor and register the destination floor from the card.

Therefore this gives more time to the elevator to start coming down, for example, the elevator will receive the destination call from the card when the user is 50 meters away and thus improving the probability that the user will find the elevator waiting for him/her.

The detection area 2 can be made smaller or larger depending, for example, on the number of floors of the building or the amount of users and typical traffic conditions.

Additionally the usability of the elevator for non-registered users must be also taken into account; in this case, users will revert to the traditional push-button call giving.

### Usage scenarios

The usage scenarios can vary depending on following variable parameters:
- number of floors
- number of people simultaneously requesting elevator use
- traffic condition variations during the day / night

We describe below some usage scenarios depending on variations of these parameters and also general considerations:

### 1) Single user

This is the simplest case. When going into the building, the elevator detects his presence in advance and goes to ground floor waiting for him; when detecting that the user is close enough it start opening the doors and waiting for the user to enter. When the user is inside the elevator, the elevator can detect it and can close the door and start going to the user's registered floor.

On the opposite direction, when user exits his apartment and wanting to go out, the elevator can detect the user (smart card) proximity to a landing door and automatically register a call to ground floor; when user is inside the elevator it closes the door and goes to the ground floor.

### 2) Many users

Assuming there are 10 registered users going towards the elevator, plus some non-registered users. As soon as a registered user is within the detection area, the elevator starts recording the corresponding destination calls. When at the ground floor, the elevator can start collecting passengers and might decide waiting for other passengers which were detected and not yet inside the elevator. In this situation a user might decide not to wait and press the door-close button instead.

If the car becomes full, then the elevator is able to detect it and can start moving. It will be able to detect all users which are inside the car and therefore serving only these registered destination calls, others remaining pending. It will serve those calls plus the manually given calls.

When other registered users are at landing floors, the elevator will collect them during the downward trip.

When users reach their destination floors, the elevator assumes that the user doesn't want to immediately go back and therefore doesn't register a new destination call; for example this can be done with a timeout of, let say 5 to 10 minutes; if the user does need to go back, he should give an explicit manual floor call.

Alternatively the elevator intelligence can be improved by giving it the capacity to detect which direction the person is moving: if a person exits the elevator to ground floor and starts walking back, or if the user doesn't exit the elevator within some timeout (for example about 10 seconds) then the elevator can smartly assume that the user intends to go back to his floor. For example, if the user remembers to have forgotten something and intends to go back, all he has to do is stay inside the elevator and it will take it back. Therefore the elevator can be thought of a means of transporting a user between 2 registered points (floors) in an endless way if the user decides to remain inside it.

Also some priority schemes could be devised, for example give priority to registered users over non-registered ones, i.e. calls for registered users would be served first without stopping at intermediate manually requested positions.

Also there is the possibility that a registered user can give a manual call, in such case the elevator must have the ability to cancel some registered user destination call if it detects that the user exited earlier at a different destination.

### Additional possibilities

If a smart device is used instead of a smart card, it could give the possibility for the user to update its personal preferences, ex. the destination call, enable / disable the automatic call service, etc.

A futuristic scenario can be imagined where the elevator would have the ability to "talk" to its users: "Good morning Mr. Alexander, I see you forgot something, I'll take you back shortly to your floor" Or "Welcome Mr. Alexander, destination floor 33 has been registered for you, I will travel directly to your destination, you are the only user requesting my service at this moment".

### System Design and Implementation

In this chapter details of realization possibilities and required technologies for implementation are given.

First of all the technologies to be considered are:
- RFID
- Real-Time Locating
- GPS and Galileo Positioning Systems
- GSM

With the combination of the above technologies it is possible to provide the elevator with registered users real-time location and therefore making decision on the destination calls automatic allocation.

It can be also decided whether this must work only for the outside/ground floor or also to all or only some of the other floors. For higher floors the detection rule is clearly different since it is not wanted to locate movement inside people's apartments.

The location system has to be able to:
- detect people presence within the ground floor detection area, possibly including area outside the building.
- detect people presence at landings at other floors
- detect people moving direction
- detect when people are inside the car

Below are proposed 2 different design of the locating service using different combinations of technologies and later advantages and disadvantages of the solutions are compared.

### RFID Implementation

RFID has a limited range for detection, therefore a network of readers would need to be implemented, as shown in figure 2.

In figure 2 the bigger circle represent the total detection area 2 around the elevator and in the middle, is represented the elevator location 3. The other smaller circles are the single reader nodes 1 detection ranges. In such case, as people move through this area, each receiver will detect the presence and send the corresponding info to the elevator; after that the next reader 1 will send the info and from these 2 readings the elevator can determine the moving direction of the person, i.e. if they are moving towards the elevator or not; the readers transmit therefore their unique identification tag and the read card info to the elevator central controller.

At other floors it is probably enough to have 1 reader at the landing floor and maybe a reduced detection range. Also the RFID reader inside the car should cover only the car inside area for accurately deciding on passenger presence.

### GPS-GSM Implementation

The above RFID solution is limited because it does not have a required precision in implementing the locating service. Other similar radio technologies can improve on that.

For a more precise location and positioning system solution, the GPS system coupled with GSM can be used. There is however a limitation in that GPS signals don't work indoor. A future improvement will come from the Galileo project which is scheduled to be ready in a few years' time and which promises higher accuracy and possibility to work indoor.

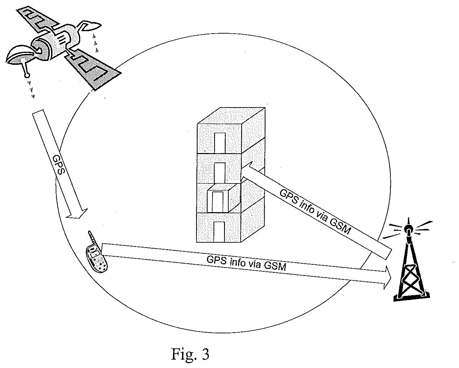

This design solution would be implemented as illustrated in figure 3.

In this scheme, all the user needs is a mobile phone with a GPS receiver integrated (In the future Galileo receiver). A special software on the phone knows the GPS coordinates of the elevator, and when it comes within its predefined detection area, it will start sending location info to the elevator through the GSM network. Also the elevator will know its GPS location and can therefore calculate the real-time movement of people within the detection area.

With the Galileo system this scheme would work also inside the building, so no additional receivers would be needed.

**Table 1. Designs Comparison**

| **Method** | **Advantages** | **Disadvantages** |
|---|---|---|
| RFID | Technology already available. | Locating precision. |
| | All info stored in a smart card. | Need to build a reader node network |
| GPS-GSM | Higher position info accuracy. | Galileo not yet available. |
| | No need to build additional hardware around the elevator Possibility to use the phone for customizing the elevator user data | Cost of using GSM network? |
| | | User needs a phone with GPS receiver |

## Claims

1. Passenger flow management system for managing elevator passenger flow such that elevator waiting times can be optimized, wherein the management system comprises an elevator central controller and detecting means (1) configured to detect elevator passengers registered with an elevator and given a smart card or a device which contains their data and destination floor within a detection area (2) located at least outside the building (4) and wherein, when a registered elevator passenger carrying the smart card or the device enters the detecting area (2), the detecting means (1) is configured to read the information of the smart card or the device and the passenger flow management system is configured to make the elevator go to the ground floor and wait for the registered elevator passengers and to register a destination floor from the smart card or the device, **characterized in that** the detection area (2) is located around an elevator inside the building (4).

2. Passenger flow management system according to any of claims 1, wherein detecting means (1) are configured to detect position of elevator passengers within the detection area (2).

3. Passenger flow management system according to claim 1 or claim 2, wherein detecting means (1) are configured to detect moving direction of elevator passengers within the detection area (2).

4. Passenger flow management system according to any of claims 1 - 3, wherein detecting means (1) are configured to detect number of elevator passengers within the detection area (2).

5. Passenger flow management system according to any of claims 1 - 4, wherein detecting means (1) are configured to identify elevator passengers within the detection area (2).

## Patentansprüche

1. Fahrgastfluss-Managementsystem zum Managen eines Fahrgastflusses eines Aufzugs, so dass Aufzugswartezeiten optimiert werden können, wobei das Managementsystem eine Aufzugszentralsteuerung und ein Erfassungsmittel (1) umfasst, das eingerichtet ist, um Aufzugsfahrgäste zu erfassen, die bei einem Aufzug registriert sind und eine Smartcard oder ein Gerät erhalten haben, die/das ihre Daten und ihr Zielstockwerk innerhalb eines Erfassungsbereichs (2) beinhaltet, der sich zumindest außerhalb des Gebäudes (4) befindet, und wobei, wenn ein registrierter Aufzugsfahrgast, der die Smartcard oder das Gerät trägt, den Erfassungsbereich (2) betritt, das Erfassungsmittel (1) eingerichtet ist, um die Informationen der Smartcard oder des Geräts zu lesen und das Fahrgastfluss-Managementsystem eingerichtet ist, um zu veranlassen, dass der Aufzug in das Erdgeschoss fährt und auf die registrierten Aufzugsfahrgäste wartet und ein Zielstockwerk von der Smartcard oder dem Gerät zu registrieren,
**dadurch gekennzeichnet, dass**
der Erfassungsbereich (2) sich um einen Aufzug innerhalb des Gebäudes (4) befindet.

2. Fahrgastfluss-Managementsystem nach Anspruch 1, wobei das Erfassungsmittel (1) eingerichtet ist, um eine Position von Aufzugsfahrgästen innerhalb des Erfassungsbereichs (2) zu erfassen.

3. Fahrgastfluss-Managementsystem nach Anspruch 1 oder Anspruch 2, wobei das Erfassungsmittel (1) eingerichtet ist, um eine Bewegungsrichtung von Aufzugfahrgästen innerhalb des Erfassungsbereichs (2) zu erfassen.

4. Fahrgastfluss-Managementsystem nach einem der Ansprüche 1 bis 3, wobei das Erfassungsmittel (1) eingerichtet ist, um eine Anzahl von Aufzugsfahrgästen innerhalb des Erfassungsbereichs (2) zu erfassen.

5. Fahrgastfluss-Managementsystem nach einem der Ansprüche 1 bis 4, wobei das Erfassungsmittel (1) eingerichtet ist, um Aufzugsfahrgäste innerhalb des Erfassungsbereichs (2) zu identifizieren.

## Revendications

1. Système de gestion de circulation de passagers destiné à gérer la circulation de passagers d'ascenseurs de telle sorte que les temps d'attente d'ascenseurs peuvent être optimisés, dans lequel le système de gestion comprend un régulateur central d'ascenseur et des moyens de détection (1) configurés pour détecter des passagers d'ascenseur enregistrés avec un ascenseur et dotés d'une carte à puce intelligente ou d'un dispositif qui contient leurs données et l'étage de destination à l'intérieur d'une zone de détection (2) située au moins à l'extérieur du bâtiment (4) et dans lequel, lorsqu'un passager d'ascenseur enregistré portant la carte à puce intelligente ou le dispositif entre dans la zone de détection (2), les moyens de détection (1) sont configurés pour lire les informations de la carte à puce intelligente ou le dispositif et le système de gestion de circulation de passagers est configuré pour permettre le déplacement de l'ascenseur à l'étage du rez-de-chaussée afin d'attendre les passagers d'ascenseur enregistrés et pour enregistrer un étage de destination à partir de la carte à puce intelligente ou du dispositif, **caractérisé en ce que** la zone de détection (2) est située autour d'un ascenseur à l'intérieur du bâtiment (4).

2. Système de gestion de circulation de passagers selon la revendication 1, dans lequel des moyens de détection (1) sont configurés pour détecter la position de passagers d'ascenseur à l'intérieur de la zone de détection (2).

3. Système de gestion de circulation de passagers selon la revendication 1 ou la revendication 2, dans lequel des moyens de détection (1) sont configurés pour détecter la direction de déplacement de passagers d'ascenseur à l'intérieur de la zone de détection (2).

4. Système de gestion de circulation de passagers selon une quelconque des revendications 1 à 3, dans lequel des moyens de détection (1) sont configurés pour détecter le nombre de passagers d'ascenseur à l'intérieur de la zone de détection (2).

5. Système de gestion de circulation de passagers selon une quelconque des revendications 1 à 4, dans lequel des moyens de détection (1) sont configurés pour identifier des passagers d'ascenseur à l'intérieur de la zone de détection (2).
